# EUROPÄISCHE PATENTANMELDUNG

(11) **EP 4 376 264 A1**
(43) Veröffentlichungstag der Anmeldung: **29.05.2024**
(21) Anmeldenummer: 22209404.7
(22) Anmeldetag: 24.11.2022
(51) Int. Cl.: H02K 1/02, H02K 1/04, H02K 15/02

(54) **VERFAHREN ZUR HERSTELLUNG EINES BLECHPAKETS UND ELEKTRISCHE MASCHINE**

(71) Anmelder: Siemens Aktiengesellschaft, 80333 München (DE)
(72) Erfinder: Rieger, Gotthard, 80636 München (DE); Schmidt, Alexander, 84034 Landshut (DE)
(74) Vertreter: Siemens Patent Attorneys

(57) **Zusammenfassung**

Die Erfindung betrifft ein Verfahren zur Herstellung eines Blechpakets (2) einer elektrischen Maschine (4), umfassend folgende Schritte:
a) Drucken eines Magnetblech-Grünkörpers (6) unter Verwendung einer eisenhaltigen Druckpaste (8) mittels eines Schablonendruckverfahrens (10) auf ein Substrat (12),
b) Aufbringen einer anorganischen, nichtmetallischen Isolierschicht (14) in einem Grünzustand auf eine Oberfläche (16) des Magnetblech-Grünkörpers (6),
c) Drucken eines zweiten Magnetblech-Grünkörpers (6')
d) Aufbringen einer zweiten Isolierschicht (14') im Grünzustand auf eine unbedeckte Oberfläche (16') des zweiten Magnetblech-Grünkörpers (6')
e) Aufbringen des zweiten Magnetblech-Grünkörper (6') auf die Isolierschicht (14) des ersten Magnetblech-Grünkörpers,
f) Erzeugen eines Blechpaket-Grünkörpers (18) durch wiederholen der Schritte a) bis e)
g) Sintern (20) des Blechpaketgrünkörpers (18) zu dem Blechpaket (2) mit alternierenden Magnetblechen (24) und Isolierschichten (26).

## Beschreibung

Die Erfindung betrifft ein Verfahren zur Herstellung eines Blechpakets nach Patentanspruch 1 sowie eine elektrische Maschine mit den Merkmalen des Patentanspruchs 15.

Elektrische Maschinen wie Elektromotoren und Generatoren weisen in der Regel einen Stator und einen Rotor auf, die mit elektrischen Leitern umwickelt sind. Dabei sind die Blechpakete aus einer Vielzahl von einzelnen Elektroblechen zusammengesetzt, zwischen denen jeweils eine elektrisch isolierende Schicht, insbesondere aus einem Kunstharz angebracht ist. Die Isolierschicht ist insbesondere dafür vorhanden, dass Wirbelströme, die in den einzelnen Blechen entstehen, unterdrückt werden. Die für den Motorbetrieb hinderlichen Wirbelströme sind auch bezogen auf die Dicke des Bleches abhängig von der Frequenz, die beim Betrieb des Motors anliegt. Würde man den elektrischen Kern eines Rotors oder Stators nicht in einzelne Bleche unterteilen, wie dies allgemeinhin üblich ist, so würde ein monolithischer magnetischer Block entstehen, der für den Betrieb des Motors nur einen sehr engen Frequenzbereich bei sehr niedrigen Frequenzen zulassen würde. Dies würde die Leistung des Motors deutlich reduzieren. Aus diesem Grund wird auch bei herkömmlichen elektrischen Maschinen die Abfolge von gestanzten magnetischen Blechen und einer Isolierschicht betrieben, sodass das genannte herkömmliche Blechpaket entsteht.

Insbesondere für die Anwendung von elektrischen Maschinen in mobilen Elektrofahrzeugen ist ein kompakter Bau von Elektromotoren und eine relativ hohe Frequenz für einen Fahrbetrieb mit höchster Effizienz und Reichweite wünschenswert. Dies bedeutet, dass die Dicke der verwendeten Magnetbleche möglichst reduziert werden soll. Durch gestanzte Magnetbleche erreicht man derzeit Dicken von 300 µm, die reproduzierbar herstellbar sind. Für einen kompakteren und effizienteren Motor, der möglichst frei von Wirbelstromverlusten ist, sind die herkömmlichen gestanzten Magnetbleche technisch weitgehend ausgereizt.

Die Aufgabe der Erfindung besteht darin, ein Blechpaket bereitzustellen, das gegenüber den Blechpaketen im Stand der Technik niedrigere Wirbelstromverluste aufweist und dabei einen kleineren Bauraum bezogen auf die Motorleistung benötigt. Ferner ist es Aufgabe der Erfindung eine elektrische Maschine bereitzustellen, die dies gewährleistet.

Die Lösung der Aufgabe besteht in einem Verfahren zur Herstellung eines Blechpaketes mit den Merkmalen des Patentanspruchs 1 sowie in einer elektrischen Maschine mit den Merkmalen des Patentanspruchs 15.

Das Verfahren gemäß Patentanspruch 1 zur Herstellung eines Blechpakets einer elektrischen Maschine umfasst dabei folgende Schritte:
a) Drucken eines Magnet-Grünkörpers unter Verwendung einer eisenhaltigen Druckpaste mittels eines Schablonendruckverfahrens auf ein Substrat,
b) Aufbringen einer anorganischen, nicht metallischen Isolierschicht in einem Grünzustand auf eine Oberfläche des Magnetblech-Grünkörpers,
c) Drucken eines zweiten Magnetblech-Grünkörpers,
d) Aufbringen einer zweiten Isolierschicht im Grünzustand auf eine unbedeckte Oberfläche des zweiten Magnetblech-Grünkörpers,
e) Aufbringen des zweiten Magnetblech-Grünkörpers auf die Isolierschicht des ersten Magnetblech-Grünkörpers,
f) Erzeugen eines Blechpaket-Grünkörpers durch Wiederholen der Schritte a) bis e),
g) Sintern des Blechpaket-Grünkörpers zu dem Blechpaket mit alternierenden Magnetblechen und Isolierschichten.

Durch das Drucken von Magnetblechen mittels eines Schablonendruckverfahrens ist es möglich, Magnetbleche mit sehr geringen Dicken von weniger als 300 µm darzustellen. Realistisch sind derzeit Magnetbleche mit der Dicke von 50 bis 200 µm durch das Schablonendruckverfahren herzustellen. Dabei wird unter dem Begriff Schablonendruckverfahren auch das sogenannte Siebdruckverfahren verstanden. Grundsätzlich wird eine Schablone hergestellt, über die ein Rakel läuft und dabei eine Druckpaste auf das Substrat aufdruckt. Um die rheologischen Eigenschaften beim Druckverfahren zu verbessern, wird die Schablone in den meisten Fällen auf ein Sieb mit einer sehr feinen Maschenweite aufgebracht, und die Druckpaste mittels des Rakels durch dieses Sieb auf das Substrat gepresst. Somit ist der Begriff Siebdruckverfahren und der Begriff Schablonendruckverfahren zu subsumieren.

Durch dieses Schablonendruckverfahren oder Siebdruckverfahren wird demnach ein Magnetblech-Grünkörper auf das Substrat gedruckt, der üblicherweise, wenn dieses Verfahren nach dem Stand der Technik angewendet wird, von dem Substrat abgelöst wird und in einem Sinterofen gesintert wird. Das vorliegende Verfahren zeichnet sich dadurch aus, dass in einem weiteren Schritt auf die Oberfläche des gedruckten Magnetblech-Grünkörpers eine anorganische nichtmetallische Isolierschicht aufgebracht wird. Ein zweiter Magnetblech-Grünkörper, der ebenfalls mit dem Schablonendruckverfahren hergestellt wird, wird auf diesen ersten Magnetblech-Grünkörper und der Isolierschicht aufgelegt. Auf diese Weise wird ein Stapel von Magnetblechen im Grünzustand und Isolierschichten im Grünzustand erzeugt, der für sich genommen eine höhere Stabilität aufweist als einzelne Magnetblech-Grünkörper. Dieser Stapel, den man auch als Blechpaket-Grünkörper bezeichnet, wird nun in einem Sinterofen einem kontrollierten Sintervorgang zugeführt, wobei während des Sinterns Partikel der einzelnen Bestandteile des Grünkörpers, insbesondere durch Diffusionsprozesse zu einem monolithischen, im Idealfall porenfreien Gebilde zusammensintern. Im Gegensatz zu einem gesinterten Körper versteht man unter einem Grünkörper oder einem Körper bzw. einer Schicht im Grünzustand, dass diese in der Regel noch mit Bindemitteln, beispielsweise organische Bindemittel und/oder Wasser, versetzt sind und bei den erhöhten Temperaturen zunächst entbindert werden. Das Entbindern bedeutet das Verdampfen oder Ausbrennen von Bindemitteln, also der Hilfsstoffe, die für die Formgebung des Grünkörpers nötig sind, bevor diese durch den eigentlichen Wärmebehandlungsprozess, also dem Sintern bzw. des Sintervorgangs zu dem endgültigen Bauteil verfestigt wird. Die Sintertemperatur liegt dabei in der Regel unterhalb der Schmelztemperatur bzw. der Zersetzungstemperatur der zu sinternden Materialien. Bei den vorliegenden Eisenpartikeln, die zu dem Magnetblech zusammengesintert werden, ist es zweckmäßig, wenn die Sintertemperatur etwa 50°C bis 300°C unter der Schmelztemperatur der jeweiligen verwendeten Eisenlegierung liegt. Auf diese Weise kommt es nicht zum Aufschmelzen der Partikel, was eine plötzliche Formänderung also ein Zerlaufen zur Folge hätte, sondern zu einer gezielten Diffusion von Atomen aus einem Korn zu einem Korn des zu sinternden Materials. Auf diese Weise entstehen immer größer werdende Körner, die letztendlich nach dem Sintern einen polykristallinen Monolithen mit grobem Korngefüge ausbilden.

In einer vorteilhaften Ausgestaltungsform der Erfindung wird die Isolierschicht im Grünzustand nasstechnisch aufgebracht. Das bedeutet, dass insbesondere Sprühverfahren, Tauchverfahren, aber auch Druckverfahren wie das Tampon-Druckverfahren oder ein Siebdruck- bzw. Schablonendruckverfahren für das Aufbringen der Isolierschicht im Grünzustand zweckmäßig sind.

Die aufgebrachte Isolierschicht weist nach dem Sintervorgang eine Dicke auf, die weniger als 10 % der Dicke des Magnetblechs beträgt. Es wird hierbei explizit auf die Dicke des gesinterten Magnetblechs eingegangen, da die Dicken der Schicht im Grünzustand aufgrund der verwendeten Bindemittel variieren, die bei dem Sintervorgang ausgebrannt werden. Somit kann die aufgebrachte Isolierschicht im Grünzustand je nach Bindemitteln und Anteil von Bindemitteln unterschiedlich stark schrumpfen. Dies gilt auch für die Angaben der Dicke von Magnetblechen bzw. Magnetblech-Grünkörpern.

Die Dicke des Magnetblechs nach dem Sintervorgang beträgt bevorzugt zwischen 30 µm und 500 µm, besonders bevorzugt zwischen 80 µm und 2500 µm. Derartig dünne Bleche weisen eine besonders vorteilhafte Wirkung auf die Wirbelstromverluste auf und lassen sich dennoch gut handhaben. Die Isolierschicht weist nach dem Sintervorgang dabei eine Dicke auf, die zwischen 0,1 µm und 5 µm beträgt, bevorzugt zwischen 1 µm und 5 µm. Aus diesen Angaben wird deutlich, dass die Isolierschicht bei guter elektrischer Isolierung möglichst dünn sein soll im Verhältnis zu der Dicke des Magnetblechs, sodass pro Volumeneinheit des Magnetblechs eine möglichst hohe magnetisierbare Masse vorliegt.

Für eine hohe elektrische und magnetische Isolierung weist die Isolierschicht bevorzugt ein Metalloxid, insbesondere ein Siliziumoxid, ein Aluminiumoxid, ein Titanoxid auf, wobei das Titanoxid auch Titanate miteinschließt. Derartige keramische Werkstoffe lassen sich gut durch die beschriebenen Verfahren aufbringen und weisen eine sehr gute elektrische und magnetische Isolation auf.

Es kann auch zweckmäßig sein, die Isolierschicht in situ während des Sintervorganges zu erzeugen, Hierfür wird die Isolierschicht im Grünzustand durch das Aufbringen eines Metalls auf den Magnetblech-Grünkörper gebildet, wobei das Metall, das beispielsweise aufgesprüht wird und fein dispergiert auf der Oberfläche des Magnetblech-Grünkörpers vorliegt, während des Sinterprozesses zu dem bereits genannten Metalloxid oxidiert wird.

Eine weitere vorteilhafte Ausgestaltungsform der Erfindung besteht darin, wenn bei der Anwendung des Schablonendruckverfahrens eine Siebschablone zur Anwendung kommt, die trommelförmig, rotierend ausgestaltet ist. Dabei wird kontinuierlich der jeweilige Magnetblech-Grünkörper auf zugeführte Substrate aufgedruckt. Diese Substrate werden dabei beispielsweise durch ein Förderband unterhalb der rotierenden Sieb-Schablone zugeführt.

Ebenfalls kann es zweckmäßig sein zur besseren Haftung der Isolierschicht im Grünzustand den Magnetblech-Grünkörper vor dem Aufbringen der Isolierschicht einer Trocknung der Oberfläche zuzuführen.

Ferner ist es zweckmäßig, dass nach dem Aufbringen des zweiten Magnetblech-Grünkörpers auf den ersten Magnetblech-Grünkörper (mit der dazwischen vorliegenden Isolierschicht) ein Anpressen der bestehenden Abfolge von Grünkörpers in axialer Richtung des Blechpakets erfolgt. Dies ist deshalb zweckmäßig, da im Grünzustand mögliche Oberflächenunebenheiten noch ausgeglichen werden können und die Packungsdichte des zu sinternden Magnetblech-Grünkörpers erhöht wird. Dieses Anpressen kann nach dem Auflegen eines jeden Magnetblech-Grünkörpers auf dessen Vorgänger erfolgen. Sie kann jedoch auch nach dem finalen Stapeln aller benötigten Magnetblech-Grünkörper zu dem Blechpaket-Grünkörper erfolgen.

Ferner ist es zweckmäßig, dass die Verfahrensschritte c) und e) des Anspruchs 1 insofern gemeinsam durchgeführt werden, dass der zweite Magnetblech-Grünkörper auf die Isolierschicht im Grünzustand des ersten Magnetblech-Grünkörpers aufgedruckt wird. Dies erspart es, den zweiten Magnetblech-Grünkörper vom Substrat abzuheben und ihn mittels einer entsprechenden Vorrichtung auf den bereits bestehenden ersten Magnetblechgrünkörper aufzulegen. Hierin besteht ein prozesstechnischer Vorteil, der insbesondere wirtschaftliche Vorteile bei der Herstellung bereitstellt.

In einer weiteren Ausgestaltungsform der Erfindung ist es zweckmäßig, dass auf den Magnetblech-Grünkörpern eine siliziumhaltige Schicht, insbesondere aus feinsten Partikeln mit hoher Sinteraktivität, aufgebracht wird und während des Sintervorgangs ein Diffusionsprozess des Siliziums in die Oberfläche des Magnetblech-Grünkörpers erfolgt, wobei eine intrinsische Schicht in Oberflächennähe des Magnetblech-Grünkörpers erzeugt wird, die eine intermetallische Eisen-Silizium-Phase ausbildet. Diese intrinsische Schicht in Oberflächennähe ist nicht gleichbedeutend mit der Isolierschicht, wobei diese bei der Verwendung von Siliziumoxid als Isolierschichtmaterial von derselben Materialbasis ausgegangen werden kann, nämlich dem Aufbringen von Silicium in feindispergierten Zustand auf die Oberfläche des Magnetblech-Grünkörpers. Diese intrinsische Schicht ist aber Teil des Magnetblech-Grünkörpers bzw. im gesinterten Zustand des Magnetbleches. Diese bewirkt eine verbesserte Magnetostriktion. Es ist auch zweckmäßig, wenn das aufgebrachte Silicium nicht nur zur Diffusion in die Oberfläche des Grünkörpers dient, sondern dass auch Teilbereiche davon durch Oxidation während des Sinterns in SiO₂ umgewandelt werden und die Isolierschicht bilden. Auf diese Weise entstehen so zwei Schichten, die Isolierschicht und die intrinsische mit einer intermetallische Eisen-Silizium-Phase.

Zum Einsatz des Magnetblech-Grünkörpers bzw. das daraus erzeugen Magnetbleches und Blechpaketes ist es in der Anwendung für eine elektrische Maschine zweckmäßig, wenn der Magnetblech-Grünkörper in seinem gedruckten Abbild eine rotationssymmetrische Form aufweist.

Ein weiterer Bestandteil der Erfindung ist eine elektrische Maschine, die ein Blechpaket umfasst, das nach einem der vorhergehenden Ansprüche bereitgestellt wird und als Rotor oder Stator in der elektrischen Maschine einsetzbar ist. Dies bewirkt, wie bereits beschrieben, eine höhere Leistungsdichte und einen kleineren Bauraum der gesamten elektrischen Maschine.

Weitere Ausgestaltungsformen und weitere Merkmale der Erfindung werden anhand der folgenden Figuren näher erläutert. Dabei handelt es sich um rein schematische Ausgestaltungsformen, die keine Einschränkung des Schutzbereiches darstellen. Dabei zeigen:
Figur 1: eine Explosionsdarstellung einer elektrischen Maschine,
Figur 2: eine dreidimensionale Darstellung eines Blechpakets,
Figur 3: eine Ablaufskizze eines Verfahrens zur Herstellung eines Blechpakets,
Figur 4: eine Ablaufskizze, wie in Figur 3, in alternativer Ausgestaltung,
Figur 5: eine Ablaufskizze analog Figur 3 und 4 in wiederum alternativer Ausgestaltungsform,
Figur 6: ein schematischer Querschnitt durch ein Blechpaket und
Figur 7: ein vergrößerter Ausschnitt aus dem Kreis mit der Bezeichnung VII in Figur 6 b.

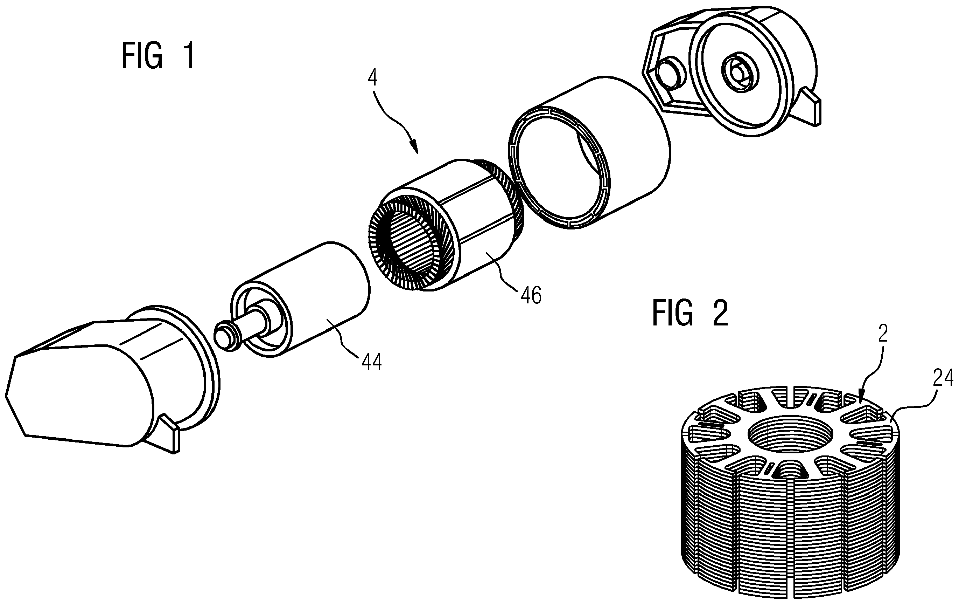

In Figur 1 ist schematisch eine elektrische Maschine 4 in Form eines Elektromotors dargestellt, die insbesondere einen Stator 46 und einen Rotor 44 aufweist. In Figur 2 ist ein Blechpaket schematisch abgebildet, das mit Wicklungen umgeben den Rotor 44 der elektrischen Maschine 4 bilden könnte. Das Blechpaket umfasst eine Vielzahl von Magnetblechen 24, zwischen denen, hier nicht dargestellt, Isolierschichten angeordnet sind.

Die nicht dargestellten Isolierschichten zwischen den einzelnen Magnetblechen 24 in Figur 2 dienen dazu, um die Magnetbleche untereinander elektrisch zu isolieren. Die elektrische Isolation durch die Isolierschichten ist insofern nötig, da Wirbelströme, die über die Geometrie, also der Dicke des Magnetbleches 24 hinausgehen, durch die Isolierschicht unterbrochen werden. Um die Wirbelstromverluste einerseits zu minimieren und auf der anderen Seite den Rotor 44 bei hohen Frequenzen zu betreiben, ist es zweckmäßig, dass die Magnetbleche 24 möglichst dünn ausgestaltet sind. Dies liegt auch daran, dass die Wirbelstromverluste quadratisch mit der Frequenz des Motors eingehen und daher bei geringeren Magnetblechdicken bei gleichen Wirbelstromverlusten höhere Frequenzen angelegt werden können. Dies ist insbesondere für die Anwendung in der Elektromobilität von Bedeutung, da hier Motoren bis zu 2 kHz vorteilhaft angewendet werden können.

Durch herkömmliche Magnetbleche, die aus einem Endlosmetallblech herausgestanzt werden, können derzeit realistisch und reproduzierbar Dicken von etwa 300 µm gewährleistet werden. Daher hat sich eine alternative Methode zur Herstellung von Magnetblechen als zweckmäßig herausgestellt, nämlich den Druck von Magnetblechen 24 mittels eines Schablonendruckverfahrens 10, insbesondere eines Siebdruckverfahrens.

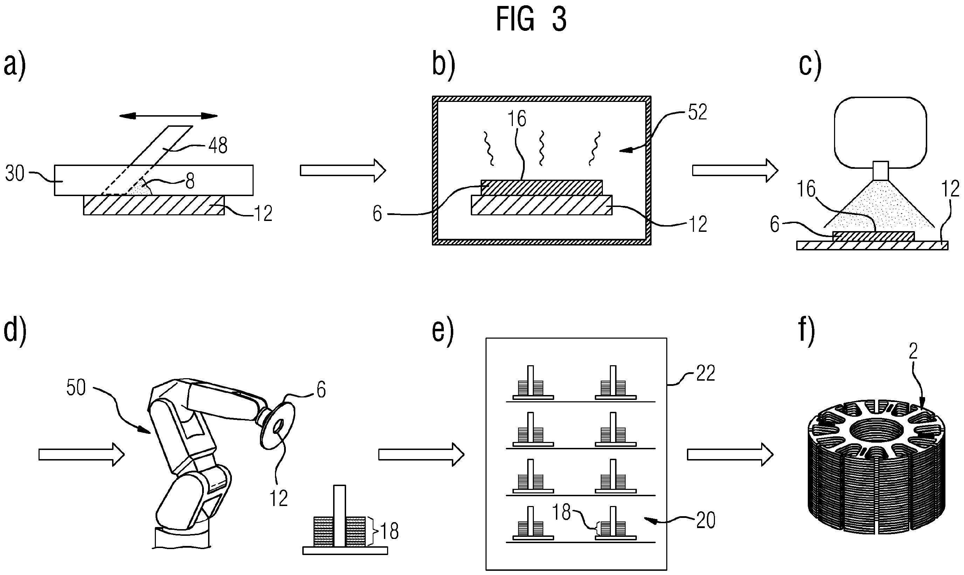

Ein derartiges Verfahren ist insbesondere in Figur 3 dargestellt. Rein konventionell wird dabei gemäß Figur 3a eine Druckpaste 8 mittels eines Rakels 48 durch eine Siebschablone 36 gepresst, sodass auf einem Substrat 12 ein Magnetblech-Grünkörper 6 aufgedruckt wird. Mittels dieses Druckverfahrens ist es möglich, Magnetblech-Grünkörper 6 so darzustellen, dass sie nach dem Drucken, Trocknen, Entbindern und einem noch zu beschreibenden Sinterprozess eine Dicke aufweisen, die zwischen 30 µm und 200 µm liegt. Das heißt derartige Magnetbleche 24 sind mit 200 µm noch einmal um ein Drittel dünner als die dünnsten herkömmlich herstellbaren Magnetbleche, die aus einem Blech herausgestanzt werden.

In Figur 3b ist schematisch dargestellt, dass der Magnetblech-Grünkörper getrocknet wird, sodass flüchtige Bestandteile aus der Oberfläche 16 des Magnetblech-Grünkörpers 6 ausdampfen können. Dabei ist zu erläutern, dass ein Grünkörper, der in diesem Fall aus der Paste 8 gebildet wird, auf der einen Seite funktionale Bestandteile umfasst. Diese sind im vorliegenden Fall insbesondere Eisenpartikel mit einer definierten Korngröße und mit einer definierten Legierungszusammensetzung. Bevorzugt für besonders gute Ummagnetisierungen sind dabei Eisenpartikel, die möglichst viel Eisen aufweisen. Jedoch auch spezielle Eisen-Silicium-Legierungen mit Siliciumanteilen bis 4 % können zur Wahrung der mechanischen Stabilität und zur Verbesserung der Magnetostriktion vorteilhaft sein. Die übrigen Bestandteile der Paste bzw. des Grünkörpers sind Lösungsmittel oder Bindemittel, die die rheologischen Eigenschaften der Paste für den Druckvorgang gewährleisten. Bei diesen Bestandteilen, die klassisch anorganisch Wasser sein können, die jedoch auch organische Bindemittel und Lösungsmittel umfassen können, muss dafür gesorgt werden, dass diese beispielsweise durch Verdampfen oder durch thermische Zersetzung aus dem Grünkörper 6 entweichen. Dies kann zumindest teilweise durch den Trocknungsprozess gemäß Figur 3b geschehen.

Der Trocknungsprozess nach Figur 3b hat auch im Weiteren den Vorteil, dass eine gewisse Verfestigung des Magnetblech-Grünkörpers 6 eintritt, sodass dieser besser handhabbar wird und für sich genommen für den Transport ohne stützende Vorrichtungen stabil genug ist. Im Schritt Figur 3c wird nun durch ein Sprühverfahren eine Isolierschicht 14 auf die Oberfläche 16 des Magnetblech-Grünkörpers 6 aufgesprüht. Hierbei handelt es sich um ein nasstechnisches Verfahren, das besonders gut einstellbar ist und somit auch sehr dünne Schichtdicken erzeugt werden können. Die in Figur 3c sich bildende, aber noch nicht dargestellte Isolierschicht 14, die sich ebenfalls nach der Definition in einem Grünzustand befindet, weist bevorzugt eine Dicke auf, die zwischen 1 µm und 5 µm liegt. Insbesondere ist es zweckmäßig, wenn die Isolierschicht 14 weniger als 10 % der Magnetblechdicke 34 umfasst.

In einem weiteren Schritt gemäß Figur 3d wird der Magnetblech-Grünkörper 6 mit der Beschichtung durch die Isolierschicht 14 vom Substrat abgenommen, was insbesondere mittels eines Stapelroboters 50 erfolgen kann und auf einem Blechpaket-Grünkörper 18 aufgestapelt. Bei einer Dicke von 100 µm, die das Magnetblech 24 als bevorzugte Beispielgröße aufweist, müssten unter Vernachlässigung der Schichtdicke der Isolierschicht 14 für jeden Zentimeter Rotorhöhe 100 Magnetbleche 26 bzw. 100 Magnetblech-Grünkörper 6 zu dem Blechpaket-Grünkörper 18 zusammengestapelt werden. Der Blechpaket-Grünkörper 18 wird nun mit mehreren baugleichen Grünkörpern 18 in einen Sinterofen 22 gegeben und es erfolgt ein Sinterprozess 20 (3e). Hierbei werden die Bleche bei einer Temperatur zwischen 1000°C und 1300°C für ca. sechs Stunden unter Schutzgas gesintert und wieder abgekühlt. Nach dem Abkühlvorgang ist der Blechpaket-Grünkörper 18 in das Blechpaket 2 gemäß Figur 3f umgewandelt.

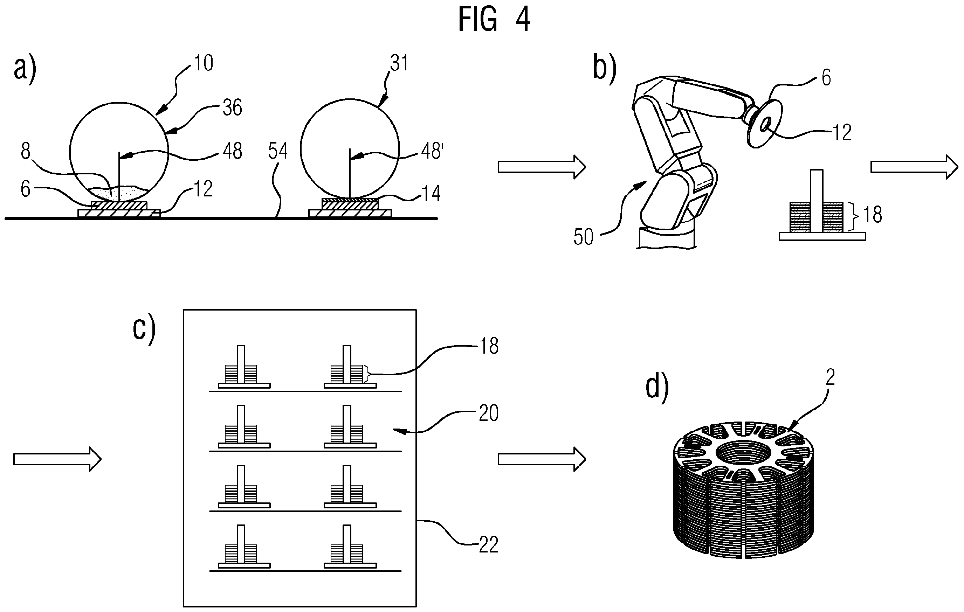

Da wie bereits erwähnt für den Aufbau des Blechpakets 2 eine Vielzahl von Magnetblech-Grünkörpern 6 zusammengestapelt werden müssen, ist es zweckmäßig, das Vorgehen gemäß Figur 3 durch Rationalisierungsschritte zu optimieren. Hierzu ist ein Beispiel in Figur 4 gegeben. In Figur 4a ist ein Schablonendruckverfahren 10 dargestellt, wobei die Siebschablone 36 trommelförmig und rotierend ausgestaltet ist und das Rakel 48 sowie die Druckpaste 8 innerhalb dieser trommelförmigen Siebschablone 36 angeordnet ist. Die Substrate 12 sind dabei auf einem Förderband 54 angeordnet und werden unter die Siebschablone 36 geführt. Die rotierende Schablone 36 mit dem Rakel 48 druckt dabei die Druckpaste 8 auf das Substrat 12, während dieses unter der Schablone 36 durchgezogen wird. Dabei entsteht der gedruckte Magnetblech-Grünkörper 6. Auf diese Weise können die pro Zeiteinheit durchgeführten Druckvorgänge gegenüber der Darstellungen gemäß Figur 3a - wo sequenziell gedruckt wird - deutlich erhöht werden.

In Figur 4a rechte Seite ist ebenfalls schematisch durch ein analoges Siebdruckverfahren dargestellt, wie die Isolierschicht 14 im Grünzustand auf die Oberfläche 16 des Grünkörpers 6 aufgedruckt wird. Auch hier handelt es sich um ein Siebdruckverfahren 31, das zwar grundsätzlich ähnlich funktioniert, wie das Verfahren mit der Siebschablone 36, jedoch hierbei deutlich dünnere Schichten in Form der Isolierschicht 14 gedruckt werden können. Daher unterscheidet sich die dort verwendete Siebschablone insbesondere durch die Maschenweite des Siebs von dem Siebdruck des Grünkörpers 6. Auch die Viskositätseigenschaften der dort verwendeten Druckpaste ist entsprechend angepasst. Hierbei handelt es sich auch nur um ein Beispielverfahren zum Aufbringen der Isolierschichte 14 im Grünzustand. Auch an dieser Stelle könnte, ebenso wie in Figur 3c dargestellte, ein Sprühverfahren angewandt werden.

Die so gedruckten Magnetblech-Grünkörper 6 mit der Isolierschicht 14 im Grünzustand werden, wie in Figur 4b schematisch dargestellt, wieder zu einem Blechpaket-Grünkörper 18 gestapelt und anschließend gemäß Figur 4c analog der Figur 3e einem Sintervorgang unterzogen. Das Resultat ist an dieser Stelle wieder ein Blechpaket 2.

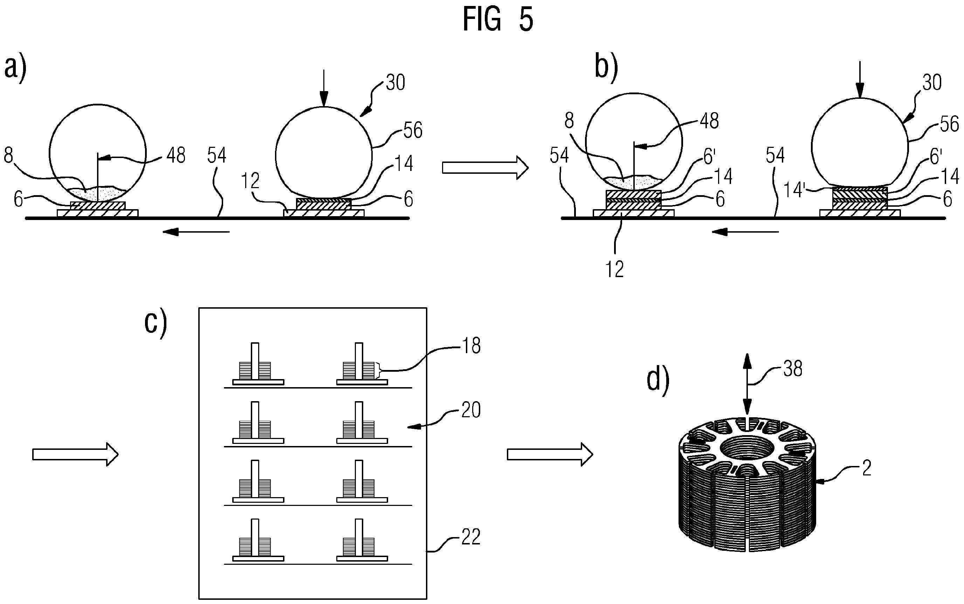

Die Figur 5 unterscheidet sich von dem Verfahren gemäß Figur 4 nun darin, dass ein weiterer Rationalisierungsschritt eingeführt ist. Die Darstellungen gemäß Figur 5a entspricht der in Figur 4a. Als weiteres Beispiel für das Aufbringen der Isolierschicht 14 im Grünzustand wird jedoch hier ein sogenanntes Tamponverfahren für die Isolierschicht schematisch dargestellt. Hierbei wird eine Silikonkugel 56 mit gezielt benetzten Flächen auf die Oberfläche 16 des Grünkörpers 6 gedruckt. Auch hier handelt es sich um ein nasstechnisches Verfahren, wobei eine feuchte Druckpaste für die Isolierschicht 14 verwendet wird. Das Tampondruckverfahren 30 weist auch den Vorteil auf, dass es gegenüber anderen Druckverfahren auch auf unebene Oberflächen aufbringbar ist. Da die Oberfläche 16 des Grünkörpers je nach Ausgestaltung der Paste 8 und je nach Druckprozess durchaus unebene und raue Bereiche aufweisen kann, ist hier das Tampondruckverfahren 30 grundsätzlich zweckmäßig.

Des Weiteren ist in Figur 5 eine Alternative zur Figur 4 insofern dargestellt, dass auf das Substrat 12, das ebenfalls auf dem Förderband 54 bewegt wird, der Grünkörper 6 liegen bleibt und auf diesen wiederum über die bereits aufgebrachte Isolierschicht 14 im Grünzustand ein zweiter Magnetblech-Grünkörper 6' aufgedruckt wird. Auf der rechten Seite der Figur 5b wird wiederum im Tampondruckverfahren 30 eine zweite Schicht 14' im Grünzustand aufgebracht. Dieses weitere Aufbringen von weiteren zweiten Magnetblech-Grünkörpern 6' erfolgt so oft, bis der Stapel an Blechpaket-Grünkörpern 18 erreicht ist, wie er in Figur 5c in dem Sinterofen 20 dargestellt ist. Auch hier wird dieser Blechpaket-Grünkörper 18 erneut einem Sinterprozess 22 unterzogen, woraus das Blechpaket 2 resultiert. In Figur 5d ist noch eine Rotationsachse 38 des Blechpakets 2 eingezeichnet, die mit zwei Pfeilen versehen ist, was dem Begriff "axiale Richtungen" entspricht. Dies ist hervorzuheben, da es beim Stapeln der einzelnen Magnetblech-Grünkörper 6, 6' in allen bisher dargestellten Ausführungsformen während oder nach dem Stapeln zweckmäßig sein kann, dass ein Druck auf diesen Blechpaket-Grünkörper 18 in axialer Richtung 38 ausgeübt werden kann. Dieser Druck dient dazu, dass die im Grünzustand noch formbaren Magnetblech-Grünkörper 6, 6' von inneren Unebenheiten befreit werden und die Packungsdichte an magnetisch wirksamem Material des Magnetbleches 24 im gesinterten Zustand des Blechpaketes 2 erhöht wird.

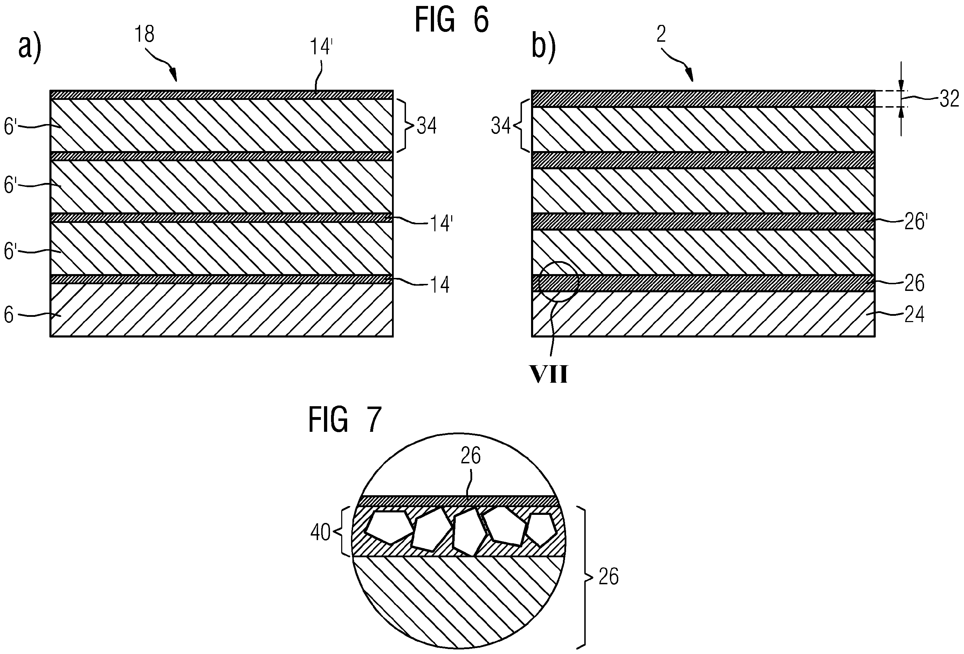

In Figur 6a und 6b sind schematische Querschnitte durch eine beliebige Schnittstelle des Blechpakets 2 bzw. des Blechpaket-Grünkörpers 18 dargestellt. In Figur 6a handelt es sich um einen Querschnitt durch den Blechpaket-Grünkörper 18, in Figur 6b um einen Querschnitt durch das Blechpaket 2. In Figur 6a ist eine Abfolge der Magnetblech-Grünkörper 6, 6' sowie die dazwischen angeordneten Isolierschichten 14 im Grünzustand und 14' zu sehen. In Figur 6b ist dem gegenübergestellt die Veränderung der Schicht 14, 14' zu den endgültigen Isolierschichten 26, 26' dargestellt. Dabei kann es zweckmäßig sein, dass die aufgesprühten Materialien für die Schicht 14 während des Sinterprozesses nicht nur einen Verdichtungsprozess unterlaufen, wie dies bereits bezüglich des Magnetblech-Grünkörpers 6 beschrieben ist, sondern dass sie auch einer chemischen Reaktion unterworfen sind. So ist es beispielsweise möglich, beim nasstechnischen Aufbringen der Schicht 14 ein Metallpulver aufzusprühen, beispielsweise in Form von Aluminium, Titan oder Silicium. Während des Sinterprozesses 20 wird dabei eine Oxidation vorgenommen, sodass die genannten Metalle zu den jeweiligen Oxiden reagieren. Die Metalloxide Aluminiumoxid, Siliciumoxid und Titanoxid sind keramische Oxide, die sehr gut elektrisch isolieren. Insbesondere das Aufbringen von Silicium hätte den Vorteil, dass der Sinterprozess 20 in derart gesteuert werden kann, dass wie in Figur 7, der Ausschnitt aus VII in Figur 6b Silicium auf die Oberfläche 16 des Grünkörpers 6 aufgebracht wird und dieses Silicium während des Sintervorgangs 20 in eine oberflächennahe Schicht 40 des entstehenden Magnetblechs 26 eindiffundiert. So ist in dieser oberflächennahen Schicht 40 neben den Eisenpartikeln ein Gefüge vorherrschend, in dem Eisen-Silicium-Mischkristalle bestehen. Diese Eisen-Siliciumhaltige Schicht 40 dient insbesondere zur Verbesserung der Magnetostriktion des Blechpaketes 2.

Besonders gut geeignet sind die beschriebenen Blechpakete 2 als Rotoren oder Statoren von elektrischen Maschinen. Insbesondre für elektrische Antriebe in der Elektromobilität besonders in Elektrofahrzeugen.

### Bezugszeichenliste

- 2: Blechpaket
- 4: elektrische Maschine
- 6: Magnetblech Grünkörper
- 8: Druckpaste
- 10: Schablonendruckverfahren
- 12: Substrat
- 14: Isolierschicht ...zustand
- 16: Oberfläche Grünkörper
- 18: Blechpaket Grünkörper
- 20: Sintern
- 22: Sinterofen
- 24: Magnetblech
- 26: Isolierschicht
- 28: Sprühverfahren
- 30: Tampondruckverfahren für Isolierschicht
- 31: Siebdruck
- 32: Dicke Isolierschicht
- 34: Dicke Magnetblech
- 36: Dicke Siebdruckschablone
- 38: axiale Richtung
- 40: siliziumhaltige Schicht
- 42: intrinsische Schicht
- 44: Rotor
- 46: Stator
- 48: Rakel
- 50: Stapelroboter
- 52: Trocknungsvorgang
- 54: Förderband

## Patentansprüche

1. Verfahren zur Herstellung eines Blechpakets (2) einer elektrischen Maschine (4), umfassend folgende Schritte:
a) Drucken eines Magnetblech-Grünkörpers (6) unter Verwendung einer eisenhaltigen Druckpaste (8) mittels eines Schablonendruckverfahrens (10) auf ein Substrat (12),
b) Aufbringen einer anorganischen, nichtmetallischen Isolierschicht (14) in einem Grünzustand auf eine Oberfläche (16) des Magnetblech-Grünkörpers (6),
c) Drucken eines zweiten Magnetblech-Grünkörpers (6')
d) Aufbringen einer zweiten Isolierschicht (14') im Grünzustand auf eine unbedeckte Oberfläche (16') des zweiten Magnetblech-Grünkörpers (6')
e) Aufbringen des zweiten Magnetblech-Grünkörper (6') auf die Isolierschicht (14) des ersten Magnetblech-Grünkörpers,
f) Erzeugen eines Blechpaket-Grünkörpers (18) durch wiederholen der Schritte a) bis e)
g) Sintern (20) des Blechpaketgrünkörpers (18) zu dem Blechpaket (2) mit alternierenden Magnetblechen (24) und Isolierschichten (26).

2. Verfahren nach Anspruch 1, **dadurch gekennzeichnet, dass** das die Isolierschicht (14) im Grünzustand nasstechnisch aufgebracht wird.

3. Verfahren nach Anspruch 2, **dadurch gekennzeichnet, dass** die Isolierschicht (14) im Grünzustand durch ein Sprühverfahren (28), ein Tauchverfahren, durch ein Tampondruckverfahren (30) oder ein Siebdruckverfahren (31) aufgebracht wird.

4. Verfahren nach einem der vorhergehenden Verfahren, **dadurch gekennzeichnet, dass** die Dicke (32) der Isolierschicht (26) im gesinterten Zustand des Blechpaketes (2) weniger als 10 % der Dicke (34) des Magnetblechs (24) beträgt.

5. Verfahren nach einem der vorhergehenden Ansprüche, **dadurch gekennzeichnet, dass** die Dicke (34) des Magnetblechs (24) in dem Blechpaket (2) nach dem Sintervorgang (20) zwischen 30 µm und 500 µm beträgt, bevorzugt zwischen 80 µm und 20 µm beträgt.

6. Verfahren nach einem der vorhergehenden Ansprüche, **dadurch gekennzeichnet, dass** die Dicke (32) der Isolierschicht (26) in dem Blechpaket (2) nach dem Sintervorgang (20) zwischen 0,1 µm und 5 µm beträgt, bevorzugt zwischen 1 µm und 5 µm beträgt.

7. Verfahren nach einem der vorhergehenden Ansprüche, **dadurch gekennzeichnet, dass** die Isolierschicht (26) ein Metalloxid umfasst, insbesondere ein Siliziumoxid, Aluminiumoxid, Zirkonoxids, ein Titanoxid einschließlich eines Titanates.

8. Verfahren nach Anspruch 7, **dadurch gekennzeichnet, dass** durch das zum Aufbringen der Isolierschicht (14) im Grünzustand ein Metall auf den Magnetblech-Grünkörper aufgebracht wird, das während des Sinterprozesses zu dem Metalloxid oxidiert wird.

9. Verfahren nach einem der vorhergehenden Ansprüche, **dadurch gekennzeichnet, dass** für das Schablonendruckverfahren (10) mittels einer Sieb-Schablone (36), die trommelförmig rotierend ausgestaltet ist, kontinuierlich Magnetblech-Grünkörper (6) auf zugeführte Substrate (12) aufgedruckt werden.

10. Verfahren nach einem der vorhergehenden Ansprüche, **dadurch gekennzeichnet, dass** nach dem Drucken des Magnetblech-Grünkörpers vor dem Aufbringen der Isolierschicht (14) im Grünzustand eine Trocknung der Oberfläche (16) des Magnetblech-Grünkörpers (6) erfolgt.

11. Verfahren nach einem der vorhergehenden Ansprüche, **dadurch gekennzeichnet, dass** nach dem Aufbringen des zweiten Magnetblech-Grünkörpers (6') ein Anpressen der bestehenden Abfolgen von Grünkörpern (6, 6') in axialer Richtung (38) des Blechpaketes (2) erfolgt.

12. Verfahren nach einem der vorhergehenden Ansprüche **dadurch gekennzeichnet, dass** die Verfahrensschritte c) und e) des Anspruchs 1 insofern gemeinsam durchgeführt werden, dass der zweite Magnetblech-Grünkörper (6') auf die Isolierschicht (14) im Grünzustand des ersten Magnetblech-Grünkörpers (6) aufgedruckt wird.

13. Verfahren nach einem der vorhergehenden Ansprüche, **dadurch gekennzeichnet, dass** auf den Magnetblech-Grünkörper (6) eine siliziumhaltige Schicht (40) aufgebracht wird und während des Sintervorgangs (20) zum Teil zur Bildung einer Siliziumoxid-Isolationsschicht beiträgt und zugleich eine Diffusion des Siliziums in die Oberfläche (16) des Magnetblech-Grünkörpers (6) erfolgt, wobei eine intrinsische Schicht (42) in Oberflächennähe des Magnetblech-Grünkörpers (6) umfassend eine intermetallische Eisen-Silizium Phase, gebildet wird.

14. Verfahren nach einem der vorhergehenden Ansprüche, **dadurch gekennzeichnet, dass** die Schablone (36) in der Art ausgestaltet wird, dass das gedruckte Abbild des Magnetblech-Grünkörpers (6) rotationssymmetrisch erscheint.

15. Elektrische Maschine umfassend eine Blechpaket (2), hergestellt nach einem der vorhergehenden Ansprüche als Rotor (44) oder Stator (46).
